**Europäisches Patentamt**

**European Patent Office**

**Office européen des brevets**

(19)

(11) Numéro de publication: **0 112 573**
**B1**

(12) **FASCICULE DE BREVET EUROPEEN**

(45) Date de publication du fascicule du brevet:
26.08.87

(51) Int. Cl.⁴: **G 01 G 3/14**

(21) Numéro de dépôt: **83113087.7**

(22) Date de dépôt: **27.12.83**

(54) **Bascule murale à cellule extensométrique.**

(30) Priorité: **28.12.82 FR 8221953**

(43) Date de publication de la demande:
**04.07.84 Bulletin 84/27**

(45) Mention de la délivrance du brevet:
**26.08.87 Bulletin 87/35**

(84) Etats contractants désignés:
**CH DE GB LI**

(56) Documents cités:
**DE - A - 2 044 614**

(73) Titulaire: **MPI, METROLOGIE PESAGE INTERNATIONAL,
2/4 Rue Isaac Newton, F-93150 Le Blanc-Mesnil (FR)**

(72) Inventeur: **Arfos, Pierre, 25 rue du Chemin Vert,
F-75011 Paris (FR)**

(74) Mandataire: **Casalonga, Axel et al, BUREAU D.A.
CASALONGA OFFICE JOSSE & PETIT Morassistrasse 8,
D-8000 München 5 (DE)**

## Description

La présente invention se rapporte à une bascule murale comprenant un capteur ou cellule extensométrique dont deux faces opposées sont fixées l'une à une platine de montage de la bascule sur un mur et l'autre à un support de la charge à peser.

Dans les bascules connues de ce type, l'une des faces du capteur extensométrique est fixée à la face de la platine de montage opposée à la face de fixation de cette platine au mur. Le support de la charge est, de son côté, fixé à la face opposée du capteur extensométrique.

Par conséquent, le support de la charge se trouve écarté du mur d'une distance correspondant à la somme de l'épaisseur de la platine de montage et de l'épaisseur du capteur. Le capteur qui peut être par exemple du type décrit dans le document FR-A 2 509 464 présente une épaisseur minimale qui n'est pas négligeable, de sorte que le support de la charge se trouve éloigné d'une distance notable du mur sur lequel la bascule est montée. Il en résulte un encombrement relativement important de la bascule par rapport au mur.

La présente invention a pour objet une bascule murale du type défini ci-dessus qui soit d'un encombrement réduit, c'est-à-dire qui dépasse moins du mur que les bascules murales connues.

Dans la bascule murale suivant l'invention, la platine de montage de la bascule sur le mur comprend une première partie pour la fixation de la platine au mur et une seconde partie, en retrait de ladite première partie, pour la fixation du capteur. L'une des faces du capteur est fixée à la face de la seconde partie de la platine tournée vers le mur de manière que le support de charge fixé à la face opposée du capteur se trouve au plus près du mur.

Le support de charge de la bascule murale suivant l'invention peut avantageusement porter, en dessous de la platine de montage, un plateau articulé sur le support autour d'un axe horizontal parallèle au mur. Ce plateau peut occuper une première position ou position d'utilisation dans laquelle il est sensiblement perpendiculaire au mur, et une seconde position dans laquelle il est relevé dans une position sensiblement parallèle au mur.

Notamment lors de l'utilisation de la bascule murale suivant l'invention pour le pesage de pièces de viande, par exemple dans des abattoirs, le support de la charge peut avantageusement comporter un crochet de suspension au-dessus de la platine de montage.

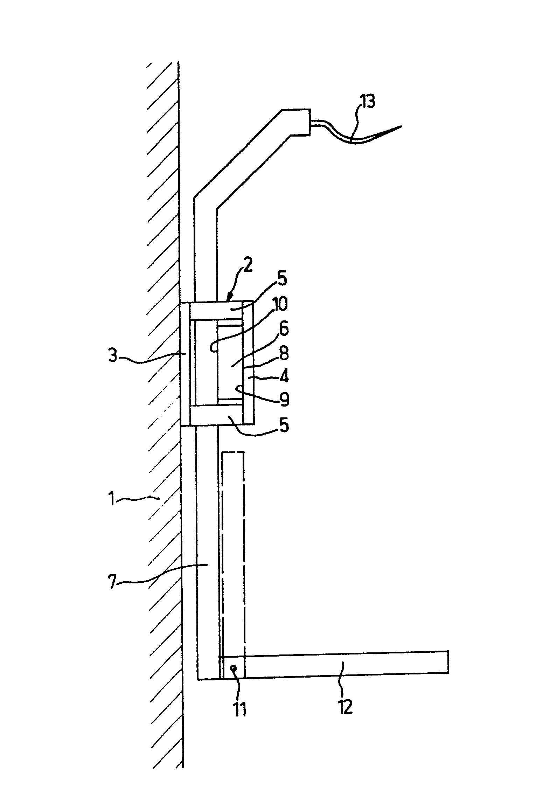

En se référant à la figure unique du dessin annexé, on va décrire ci-après plus en détail un mode de réalisation illustratif et non limitatif d'une bascule murale suivant l'invention.

La bascule illustrée par le dessin est montée sur un mur 1 par une platine 2. La platine 2 comprend une partie 3 de fixation au mur 1 et une partie 4 reliée par des entretoises 5 à la partie 3 de manière à se trouver en retrait de la partie 3 par rapport au mur 1.

Un capteur extensométrique 6 fixé entre la platine 2 et un support de charge 7 sensiblement vertical comprend une face 8 fixée à la face 9 de la partie 4 de la platine 2, tournée vers le mur 1. Le support 7 est fixé à la face opposée 10 du capteur 6.

Les moyens de fixation non représentés peuvent être des vis ou des moyens analogues.

Le support de charge 7 qui s'étend ainsi verticalement au plus près du mur 1 porte, à distance en dessous de la platine 2, un plateau de charge 11 monté sur le support 7 autour d'un axe d'articulation 12 horizontal parallèle au mur 1 de manière que le plateau 11 puis s'occuper une position d'utilisation horizontale et puisse être rabattu, en cas de non utilisation, vers le haut dans la position indiquée en tiret. Dans cette position relevée, le plateau 11 ne dépasse que très peu du mur 1.

Au-dessus de la platine 2, le support de charge 7 porte un crochet 13 permettant par exemple de peser des morceaux de viande suspendus au crochet 13.

## Revendications

1. Bascule murale comprenant un capteur extensométrique dont les deux faces opposées sont fixées, l'une à une platine de montage de la bascule sur le mur et l'autre à un support de la charge à peser, caractérisée par le fait que la platine de montage (2) comprend une première partie (3) pour la fixation de la platine au mur (1) et une seconde partie (4), en retrait de ladite première partie, pour la fixation du capteur (6) et que l'une (8) des faces opposées (8, 10) du capteur est fixée à la face (9) de ladite seconde partie (4), tournée vers le mur (1) de manière que le support (7) de la charge à peser, fixé à la face opposée (10) du capteur (6), se trouve au plus près du mur (1).

2. Bascule suivant la revendication 1, caractérisée par le fait que le support (7) de la charge à peser porte, en dessous de la platine de montage (2), un plateau (11) articulé sur le support autour d'un axe (12) horizontal, parallèle au mur (1) de manière que le plateau (11) puisse occuper une première position d'utilisation dans laquelle il est sensiblement perpendiculaire au mur, et une seconde position relevée dans laquelle il est sensiblement parallèle au mur.

3. Bascule murale suivant la revendication 1 ou 2, caractérisée par le fait que le support (7) pour la charge porte un crochet de suspension (13) au-dessus de la platine de montage (2).

## Patentansprüche

1. Wandwaage mit einem Dehnungsmessfühler, dessen beide entgegengesetzte Seiten einerseits an einer Platte zum Befestigen der Waage an der Wand und andererseits an einem Träger für die zu wiegende Last befestigt sind, dadurch gekennzeichnet, dass die Befestigungsplatte (2) aus einem ersten Teil (3) zum Befestigen der Platte an der Wand (1) und einem zweiten, gegenüber diesem ersten Teil zurückgesetzten Teil (4) zur Befestigung des Messfühlers (6) besteht, und dass die eine (8) der entgegengesetzten Seiten (8, 10) des Messfühlers so an der der Wand zugewandten Seite (9) des zweiten Teils (4) befestigt ist, dass sich der an der entgegengesetzten Seite (10) des Messfühlers (6) befestigte Träger (7) für die zu wiegende Last so nahe wie möglich an der Wand (1) befindet.

2. Waage nach Anspruch 1, dadurch gekennzeichnet, dass der Träger (7) für die zu wiegende Last unter der Befestigungsplatte (2) eine an dem Träger um eine horizontale, der Wand (1) parallele Achse (12) schwenkbar angelenkte Tischplatte (11) aufweist, so dass die Tischplatte (11) eine erste Benutzungsstellung, in der sie im wesentlichen rechtwinklig zur Wand steht, und eine zweite aufgerichtete Stellung, in der sie im wesentlichen der Wand parallel steht, einnehmen kann.

3. Wandwaage nach Anspruch 1 oder 2, dadurch gekennzeichnet, dass der Träger (7) für die Last über der Befestigungsplatte (2) einen Aufhängehaken (13) trägt.

**Claims**

1. Wall balance comprising a strain gauge sensor whose two opposite faces are fixed, on one hand to a plate for mounting the balance on the wall and on the other hand to a support for the load to be weighed, characterized by the fact that the mounting plate (2) comprises a first part (3) for fastening the plate to the wall (1) and a second part (4) set back from said first part and serving for fastening the sensor (6), and that one (8) of the opposite faces (8, 10) of the sensor is fixed to that face (9) of said second part (4) which is turned towards the wall (1), in such a manner that the load support (7) fixed to the opposite face (10) of the sensor (6) is situated as close as possible to the wall (1).

2. Balance according to Claim 1, characterized by the fact that the support (7) of the load to be weighed carries below the mounting plate (2) a tray (11) pivoted on the support about a horizontal axis (12) parallel to the wall (1) in such a manner that the tray (11) can occupy a first utilization position, in which it is substantially at right angles to the wall, and a second, raised position in which it is substantially parallel to the wall.

3. Wall balance according to Claim 1 or 2, characterized by the fact that the load support (7) carries a suspension hook (13) above the mounting plate (2).